# FASCICULE DE BREVET EUROPEEN

(11) **EP 3 784 550 B1**
(45) Date de publication et mention de la délivrance du brevet: **19.07.2023**
(21) Numéro de dépôt: 19718423.7
(22) Date de dépôt: 18.03.2019
(51) Int. Cl.: B62D 25/06

(54) **TRAVERSE SUPERIEURE AMORTISSANTE POUR UNE STRUCTURE DE VEHICULE AUTOMOBILE**
STOSSDÄMPFENDER OBERER QUERTRÄGER EINES KRAFTFAHRZEUG
SHOCK DAMPENING UPPER CROSSBEAM FOR A VEHICLE

(30) Priorité: 24.04.2018 FR 1853558
(43) Date de publication de la demande: 03.03.2021
(73) Titulaire: PSA Automobiles SA, 78300 Poissy (FR)
(72) Inventeur: BENANE, Said, 94240 L HAY LES ROSES (FR)
(86) Numéro de dépôt international: PCT/FR2019/050604
(87) Numéro de publication internationale: WO 2019/207219

(56) Documents cités:
- EP-A2- 1 043 214
- FR-A1- 2 976 234
- US-A1- 2012 153 676
- US-A1- 2016 297 480

## Description

L'invention a trait au domaine des véhicules automobiles, plus particulièrement à une structure de véhicule automobile.

La structure d'un véhicule automobile est généralement constituée par des tôles, qui sont assemblées lors du ferrage par diverses techniques connues de l'homme du métier, telles que le soudage. Plus spécifiquement, le pavillon de toit d'un véhicule nécessite plusieurs traverses pour le soutenir, notamment en cas de choc avec enfoncement du pavillon. Le pavillon et les traverses sont généralement maintenus latéralement par des poutres d'arc de pavillon.

Le document de brevet publié FR 2 976 234 A1 divulgue une structure ou carrosserie de véhicule automobile, comprenant, de chaque côté, un pied central et une traverse centrale de pavillon de toit qui soutiennent ledit pavillon. La traverse est un profilé formant deux rainures parallèles sur toute sa longueur, et une nervure centrale de renfort positionnée entre ces deux rainures. La tête du pied central comprend un renfoncement dans lequel est disposée une extrémité de la traverse. Une poutre d'arc de pavillon soutient latéralement ledit pavillon, et comprend une section transversale formée en creux qui s'emboîte en dessous du renfoncement du pied central. Cette jonction entre la traverse, la poutre d'arc de pavillon et le pied central est très rigide, et procure très peu d'absorption en cas de choc sur le pavillon du toit.

Le document EP1043214 A2 décrit une traverse de toit comprenant une entretoise de toit fixée à la surface intérieur d'un panneau de toit et un élément amortisseur fixé au renfort de toit.

Le document US2012153676 A1 décrit une structure de partie supérieure d'une carrosserie de véhicule comportant un montant central et un montant latéral de toit, laquelle structure est dotée d'une rigidité et d'une résistance améliorées contre une charge générée par une collision latérale.

Le document US2016297480 A1 décrit une structure de toit d'un véhicule comprenant un élément de support transversal prévu sous un panneau de toit pour à la fois supporter le panneau de toit et fournir un support latéral lors d'un choc latéral sur le véhicule.

L'invention a pour objectif de pallier au moins un des inconvénients de l'état de la technique susmentionné. Plus particulièrement, l'invention a pour objectif d'améliorer le comportement en déformation d'une traverse de pavillon.

L'invention a pour objet une structure de véhicule automobile, comprenant une traverse de pavillon de toit, ladite traverse comprenant deux extrémités fixées à des poutres d'arc dudit pavillon, remarquable en ce que la traverse présente à chacune des deux extrémités une section avec un profil horizontal non-rectiligne comprenant deux portions latérales opposées et une portion centrale en porte-à-faux entre lesdites portions latérales, ladite portion centrale étant apte à fléchir vers la poutre d'arc de pavillon correspondante en cas d'effort correspondant exercé sur la traverse.

Selon l'invention, chacune des deux poutres d'arc de pavillon présente un renfoncement en vis-à-vis de la portion centrale de la section d'extrémité correspondante de la traverse, permettant à ladite portion de fléchir.

Avantageusement, les poutres d'arc de pavillon présentent une forme générale d'arc de cercle aplani sur une portion supérieure et médiane, au niveau de la jonction entre la poutre et la traverse de pavillon de toit. La poutre d'arc de pavillon est constituée par deux profilés latéraux, interne et externe, présentant chacun une section en U. Plus particulièrement, la section du profilé externe comprend une âme depuis laquelle s'étendent deux ailes supérieure et inférieure, prolongées dans leurs extrémités par deux pattes supérieure et inférieure. La section du profilé interne comprend également deux pattes supérieure et inférieure, par lesquelles les profilés sont fixés entre eux pour former la poutre.

Selon un mode avantageux de l'invention, une tôle de renfort est disposée entre chacune des deux extrémités de la traverse et de la poutre d'arc de pavillon correspondante.

Selon un mode avantageux de l'invention, chacune des deux tôles de renfort forme un renfoncement en vis-à-vis de la portion centrale de la section d'extrémité correspondante de la traverse, permettant à ladite portion de fléchir.

Selon un mode avantageux de l'invention, le renfoncement de chacune des deux tôles de renfort est situé au-dessus et à distance du renfoncement de la poutre d'arc de pavillon correspondante, de manière à former deux étages successifs de réception de la portion centrale de la section d'extrémité correspondante de la traverse, en cas d'effort correspondant exercé sur la traverse.

Avantageusement, la structure de carrosserie du véhicule comprend un pied central, le pied central s'insérant dans une échancrure située dans une feuillure inférieure de jonction des profilés de la poutre d'arc de pavillon. Le renfoncement est préférentiellement positionné sur une feuillure supérieure de jonction des profilés de ladite poutre.

Selon un mode avantageux de l'invention, les deux portions latérales et la portion centrale du profil de la section de chacune des deux extrémités de la traverse sont généralement rectilignes et reliées entre elles par deux portions en U inversé.

Selon un mode avantageux de l'invention, les deux portions en U inversé de la section des deux extrémités de la traverse s'étendent sur toute la traverse.

Selon un mode avantageux de l'invention, les deux portions en U inversé de la section de la traverse présentent une profondeur maximale B à deux zones latérales situées à une distance comprise entre 20% et 30% de la longueur totale de la traverse, de chacune des extrémités de ladite traverse.

Avantageusement, les deux portions en U inversé de la section de la traverse présentent une profondeur minimale b aux extrémités de la traverse en contact avec chacune des poutres d'arc de pavillon. Préférentiellement, la profondeur des portions en U inversé diminue progressivement depuis les zones latérales vers les extrémités de la traverse en contact avec les poutres. La profondeur minimale b correspond à une profondeur comprise entre 20% et 70% de la profondeur maximale B. Avantageusement, la traverse comprend, en outre, une partie médiane entre les zones latérales de la traverse, les deux portions en U inversé sur la partie médiane ayant la profondeur minimale b.

Selon un mode avantageux de l'invention, la traverse présente un moment quadratique en flexion qui est maximal à deux zones latérales situées à une distance comprise entre 20% et 30% de la longueur totale de la traverse, de chacune des extrémités de ladite traverse.

Selon un mode avantageux de l'invention, la profondeur maximale B des deux portions en U inversé et/ou le moment quadratique en flexion maximal aux zones latérales de la traverse est supérieur d'au moins 20% à la profondeur moyenne desdites portions et/ou au moment quadratique moyen sur toute la longueur de la traverse, respectivement.

Préférentiellement, les profilés formant la poutre et la traverse sont fixés ensemble par soudure, ou par des éléments de fixation.

Les mesures de l'invention sont intéressantes en ce qu'elles améliorent le comportement de la traverse en raideur et en déformation. La présence de portions en U inversé d'une taille croissante depuis la jonction avec la poutre vers la partie médiane de la traverse permet de limiter l'enfoncement de celle-ci. La présence d'une zone de renfort à deux étages à la jonction entre la traverse et la poutre permet d'améliorer l'absorption d'énergie d'un choc aux extrémités de la traverse.

D'autres caractéristiques et avantages de la présente invention seront mieux compris à l'aide de la description et des dessins parmi lesquels :
- La figure 1 est une vue en perspective d'une structure de véhicule automobile, avec une traverse de pavillon de toit selon l'invention ;
- La figure 2 est une vue de la traverse de pavillon de toit montrée à la figure 1 et fixée à une poutre d'arc de pavillon ;
- La figure 3 montre une vue de l'extérieur de la jonction entre la traverse et la poutre d'arc de pavillon montrée à la figure 2 ;
- La figure 4 est une vue de l'intérieur de la jonction de la figure 3 ;
- La figure 5 est une vue en perspective montrant la jonction des figures 1 et 4.

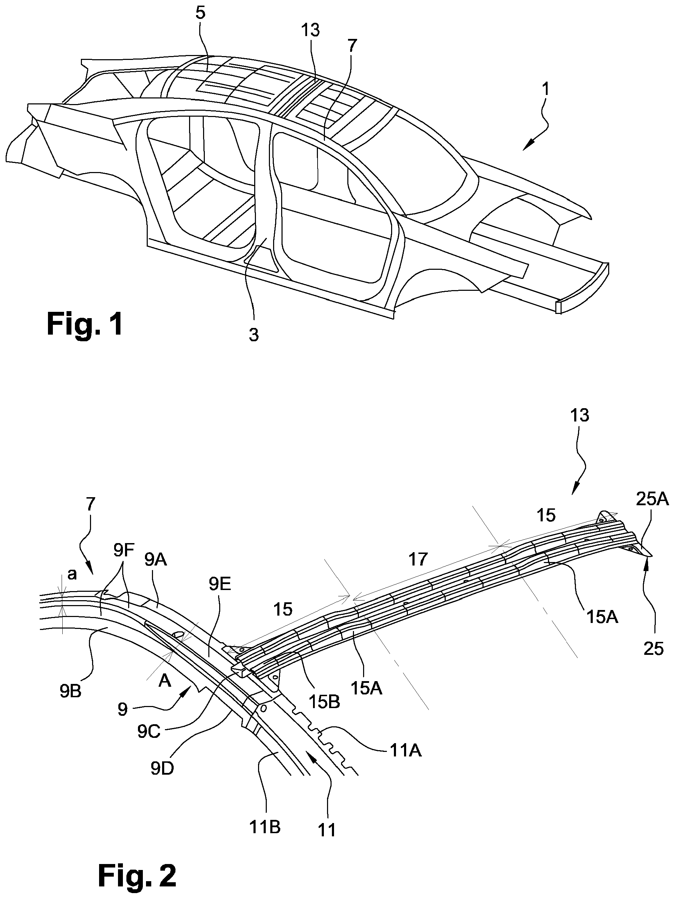

La figure 1 montre une vue en perspective d'une structure de véhicule automobile avec une traverse de pavillon de toit selon l'invention. La structure 1 comprend au moins deux pieds centraux 3, raccordant le soubassement du véhicule à un pavillon de toit 5. Le pavillon de toit 5 est maintenu latéralement par des poutres 7 d'arc de pavillon 5, et peut également être renforcé par une ou plusieurs traverses de pavillon. La traverse 13 de pavillon de toit 5 selon l'invention est une traverse positionnée au milieu et en dessous du pavillon du toit 5, au niveau du pied central 3.

La figure 2 montre une vue d'une partie de la structure de la figure 1, en particulier d'une portion de l'une des poutres d'arc de pavillon et de la traverse de pavillon selon l'invention. Chaque poutre 7 d'arc de pavillon a une forme d'arc de cercle aplani dans sa portion supérieure et médiane, au niveau de la jonction entre la poutre 7 et la traverse 13 de pavillon de toit. La poutre 7 d'arc de pavillon comprend un profilé externe 9 et un profilé interne 11, les deux profilés (9, 11) formant un corps creux avec une section fermée, par exemple de section généralement trapézoïdale. Cette forme spécifique est apte à améliorer la déformation de la poutre 7 en cas de choc. Chacun des profilés (9, 11) comprend une patte supérieure (9A, 11A) et une patte inférieure (9B, 11B), par lesquelles les deux profilés (9, 11) sont fixés ensemble via des feuillures de jonction, par des techniques connues de l'homme du métier, telles que par soudage. Les profilés externe 9 et interne 11 présentent plus particulièrement une section en U. Plus spécifiquement, le profilé externe 9 comprend une âme 9E depuis laquelle s'étendent deux ailes supérieure et inférieure 9F, prolongées dans leurs extrémités par les deux pattes supérieure 9A et inférieure 9B. Préférentiellement, le profilé externe 9 de la poutre 7 d'arc présente une âme 9E dans les extrémités inférieures de ladite poutre 7 d'une hauteur a comprise entre 30% et 70% de la hauteur maximale A au niveau de la jonction de la poutre 7 avec la traverse 13. Chacun des profilés (9, 11) présente en outre un renfoncement (9C, le renfoncement du profilé interne 11 n'étant pas visible sur cette figure). Les renfoncements 9C sont préférentiellement positionnés sur les pattes supérieures (9A, 11A) des profilés (9, 11), et permettent l'insertion de la traverse 13 de pavillon de toit selon l'invention sur le dessus de la poutre 7. Les profilés (9, 11) comprennent en outre une échancrure (9D, l'échancrure du profilé interne 11 n'étant pas visible sur cette figure), les échancrures 9D étant préférentiellement positionnées dans les pattes inférieures (9B, 11B) des profilés (9, 11). Les échancrures 9D sont aptes à permettre la fixation au pied central (visible uniquement à la figure 1).

La traverse 13 de pavillon de toit comprend, dans son sens longitudinal, une partie médiane 17, prolongée latéralement par deux parties latérales 15. Chacune des parties latérales 15 comprend plus particulièrement une zone latérale 15A, positionnées à proximité de la partie médiane 17, dont les caractéristiques seront plus préférentiellement décrites en relation avec les figures 2 à 5. La traverse 13, et plus particulièrement, chacune des parties latérales 15, comprend en outre une extrémité 15B, permettant la fixation de la traverse 13 aux poutres 7 d'arc de pavillon. Cette figure montre également une tôle de renfort 25 avec deux ailes latérales 25A servant à la fixation dudit renfort 25. La tôle de renfort 25 est préférentiellement positionnée entre les extrémités 15B de la traverse 13 et les poutres 7 d'arc de pavillon.

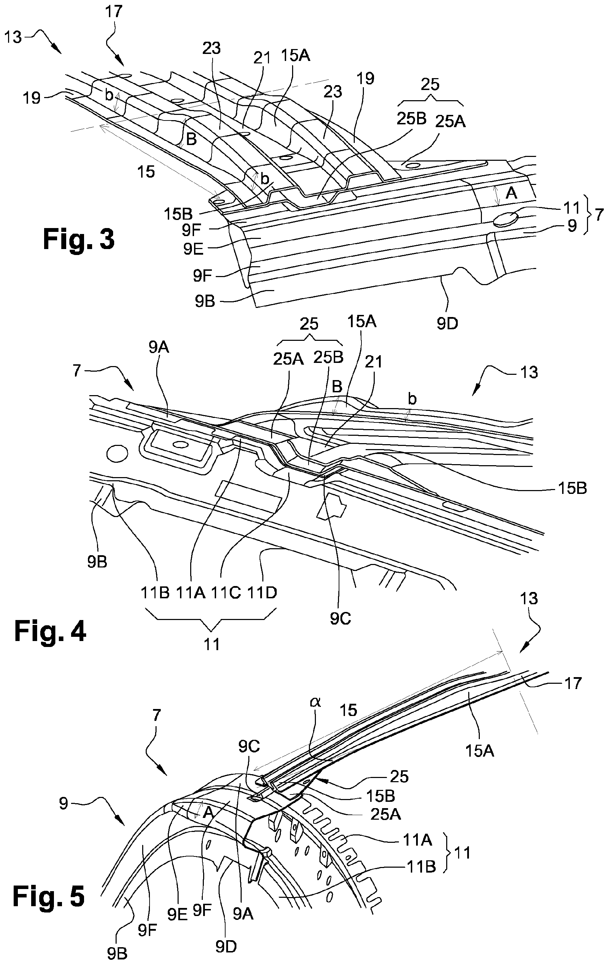

La figure 3 montre une vue en perspective de la jonction entre la traverse et la poutre d'arc de pavillon. La traverse 13 présente, à chacune de ses extrémités 15B, une section avec un profil horizontal non-rectiligne. Le profil comprend deux portions latérales 19 opposées et une portion centrale 21 en porte-à-faux avec les portions latérales 19. Ces portions (19, 21) sont généralement rectilignes et reliées entre elles par deux portions en U inversé 23. Chaque portion en U inversé 23 de la traverse 13 s'étend préférentiellement sur toute la longueur de la traverse 13. Chaque portion en U inversé 23 présente une profondeur maximale B au niveau des deux zones latérales 15A. Ces zones latérales 15A sont situées à une distance comprise entre 20% et 30% de la longueur totale de la traverse 13, depuis chacune des extrémités 15B de ladite traverse 13. Les portions en U inversé 23 présentent également une profondeur minimale b aux extrémités 15B de la traverse 13. Préférentiellement, la profondeur des portions en U inversé 23 diminue progressivement depuis les zones latérales 15A vers les extrémités 15B de la partie latérale 15 de la traverse 13. La partie médiane 17 de la traverse 13 présente également une même profondeur minimale b. La traverse 13 a un moment quadratique en flexion qui est maximal aux deux zones latérales 15A. La profondeur maximale B des deux portions en U inversé 23 et/ou le moment quadratique en flexion maximal aux zones latérales 15A de la traverse 13 est supérieur d'au moins 20% à la profondeur moyenne desdites portions 23 et/ou au moment quadratique moyen sur toute la longueur de la traverse 13, respectivement.

Sur cette figure, les tôles de renfort 25 comprennent un renforcement 25B, en vis-à-vis des renforcements des profilés (9, 11) de la poutre 7 d'arc de pavillon et de la portion centrale 21 de la section d'extrémité 15B de la traverse 13. Ainsi, un choc sur les extrémités 15B de la traverse 13 peut entraîner un enfoncement de ladite traverse 13 dans les renfoncements 25B de la tôle de renfort 25 et de la poutre 7, ce qui limite les déformations au niveau du pavillon.

La figure 4 montre une vue de l'intérieur de la jonction entre la traverse de pavillon de toit, et la poutre d'arc de pavillon. Sur cette figure, la poutre 7 d'arc de pavillon étant vue de l'intérieur, c'est plus particulièrement le profilé interne 11 qui est visible. On peut ainsi voir le renfoncement 11C dudit profilé 11 et l'échancrure 11D, précédemment décrits aux figures 2 et 3. Le renfoncement 25B de chacune des deux tôles de renfort 25 est situé au-dessus et à distance du renfoncement (9C, 11C) de la poutre 7 d'arc de pavillon correspondante, de manière à former deux étages successifs de réception de la portion centrale 21 de la section d'extrémité 15B correspondante de la traverse 13, en cas d'effort correspondant exercé sur la traverse 13.

La figure 5 montre une vue de la jonction entre la traverse de pavillon de toit et une des poutres d'arc de pavillon. Sur cette figure, on peut voir la forme spécifique de la poutre 7 au niveau de la jonction avec la traverse 13. La poutre 7, qui forme un arc de cercle, s'aplani dans sa portion supérieure et médiane au niveau de la jonction. On peut apercevoir l'épaississement de l'âme 9E du profilé externe 9, correspondant à la hauteur A. On peut également voir, sur cette figure, la forme particulière de la traverse 13. En effet, la traverse 13 présente un angle de courbure α depuis la portion médiane 17 vers extrémités 15B de la partie latérale 15, l'angle de courbure α étant compris entre 10° et 30°. Cet angle α est particulièrement accentué entre la zone latérale 15A et l'extrémité 15B de la traverse 13.

## Revendications

1. Structure (1) de véhicule automobile, comprenant une traverse (13) de pavillon de toit (5), ladite traverse (13) comprenant deux extrémités (15B) fixées à des poutres (7) d'arc dudit pavillon (5),
la traverse (13) présentant à chacune des deux extrémités (15B) une section avec un profil horizontal non-rectiligne comprenant deux portions latérales (19) opposées et une portion centrale (21) en porte-à-faux entre lesdites portions latérales (19), ladite portion centrale (21) étant apte à fléchir vers la poutre (7) d'arc de pavillon (5) correspondante en cas d'effort correspondant exercé sur la traverse (13), ladite structure étant **caractérisée en ce que** chacune des deux poutres (7) d'arc de pavillon (5) présente un renfoncement (9C, 11C) en vis-à-vis de la portion centrale (21) de la section d'extrémité (15B) correspondante de la traverse (13), permettant à ladite portion de fléchir.

2. Structure (1) selon l'une des revendications 1, **caractérisée en ce qu'**une tôle de renfort (25) est disposée entre chacune des deux extrémités (15B) de la traverse (13) et de la poutre (7) d'arc de pavillon (5) correspondante.

3. Structure (1) selon la revendication 2, **caractérisée en ce que** chacune des deux tôles de renfort (25) forme un renfoncement (25B) en vis-à-vis de la portion centrale (21) de la section d'extrémité (15B) correspondante de la traverse (13), permettant à ladite portion de fléchir.

4. Structure (1) selon les revendications 1 et 3, **caractérisée en ce que** le renfoncement (25B) de chacune des deux tôles de renfort (25) est situé au-dessus et à distance du renfoncement (9C, 11C) de la poutre (7) d'arc de pavillon (5) correspondante, de manière à former deux étages successifs de réception de la portion centrale (21) de la section d'extrémité (15B) correspondante de la traverse (13), en cas d'effort correspondant exercé sur la traverse (13).

5. Structure (1) selon l'une des revendications 1 à 4, **caractérisée en ce que** les deux portions latérales (19) et la portion centrale (21) du profil de la section de chacune des deux extrémités (15B) de la traverse (13) sont généralement rectilignes et reliées entre elles par deux portions en U inversé (23).

6. Structure (1) selon la revendication 5, **caractérisée en ce que** les deux portions en U inversé (23) de la section des deux extrémités (15B) de la traverse (13) s'étendent sur toute la traverse (13).

7. Structure (1) selon la revendication 6, **caractérisée en ce que** les deux portions en U inversé (23) de la section de la traverse (13) présentent une profondeur maximale B à deux zones latérales (15A) situées à une distance comprise entre 20% et 30% de la longueur totale de la traverse (13), de chacune des extrémités (15B) de ladite traverse (13).

8. Structure (1) selon l'une des revendications 1 à 7, **caractérisée en ce que** la traverse (13) présente un moment quadratique en flexion qui est maximal à deux zones latérales (15A) situées à une distance comprise entre 20% et 30% de la longueur totale de la traverse (13), de chacune des extrémités (15B) de ladite traverse (13).

9. Structure (1) selon l'une des revendications 7 et 8, **caractérisée en ce que** la profondeur maximale B des deux portions en U inversé (23) et/ou le moment quadratique en flexion maximal aux zones latérales (15A) de la traverse (13) est supérieur d'au moins 20% à la profondeur moyenne desdites portions (23) et/ou au moment quadratique moyen sur toute la longueur de la traverse (13), respectivement.

## Patentansprüche

1. Struktur (1) eines Kraftfahrzeuges mit einer Quertraverse (13) eines Dachhimmels (5), wobei die Quertraverse (13) zwei Enden (15B) aufweist, die an Bogenbalken (7) des Dachhimmels (5) befestigt sind,
der Querträger (13), der an jedem der beiden Enden (15B) einen Querschnitt mit einem nicht geradlinigen horizontalen Profil aufweist, das zwei gegenüberliegende Seitenabschnitte (19) und einen zentralen auskragenden Abschnitt (21) zwischen den Seitenabschnitten (19) umfasst, wobei der zentrale Abschnitt (21) in der Lage ist, sich bei entsprechender auf den Querträger (13) ausgeübter Kraft zum entsprechenden Dachbogenbalken (7) hin zu biegen, wobei die Struktur **dadurch gekennzeichnet ist, dass** jeder der beiden Dachbogenbalken (7) eine Vertiefung (9C, 11 aufweist 1C) dem Mittelabschnitt (21) des entsprechenden Endabschnitts (15B) des Querträgers (13) gegenüberliegend angeordnet ist, wodurch der Mittelabschnitt biegbar ist.

2. Struktur (1) nach Anspruch 1, **dadurch gekennzeichnet, dass** ein Verstärkungsblech (25) zwischen jedem der beiden Enden (15B) des Querträgers (13) und des entsprechenden Dachbogenträgers (7) (5) angeordnet ist.

3. Struktur (1) nach Anspruch 2, **dadurch gekennzeichnet, dass** jedes der beiden Verstärkungsbleche (25) eine Ausnehmung (25B) gegenüber dem zentralen Abschnitt (21) des entsprechenden Endabschnitts (15B) des Querträgers (13) bildet, die es dem Abschnitt ermöglicht, sich zu biegen.

4. Struktur (1) nach den Ansprüchen 1 und 3, **dadurch gekennzeichnet, dass** die Vertiefung (25B) jedes der beiden Verstärkungsbleche (25) oberhalb und im Abstand von der Vertiefung (9C, 11C) des entsprechenden Dachbogenbalkens (7) (5) angeordnet ist, sodass zwei aufeinander folgende Stufen zur Aufnahme des zentralen Abschnitts (21) des entsprechenden Endabschnitts (15B) des Querträgers (13) bei entsprechender auf den Querträger (13) ausgeübter Kraft gebildet werden.

5. Struktur (1) nach einem der Ansprüche 1 bis 4, **dadurch gekennzeichnet, dass** die beiden Seitenabschnitte (19) und der mittlere Abschnitt (21) des Querschnittsprofils jedes der beiden Enden (15B) des Querträgers (13) im Allgemeinen geradlinig sind und durch zwei Abschnitte in umgekehrtem U (23) miteinander verbunden sind.

6. Struktur (1) nach Anspruch 5, **dadurch gekennzeichnet, dass** die beiden umgekehrten U-Abschnitte (23) des Querschnitts der beiden Enden (15B) des Querträgers (13) sich über den gesamten Querträger (13) erstrecken.

7. Struktur (1) nach Anspruch 6, **dadurch gekennzeichnet, dass** die beiden umgekehrt U-förmigen Abschnitte (23) des Querschnitts des Querträgers (13) eine maximale Tiefe B an zwei Seitenbereichen (15A) aufweisen, die in einem Abstand zwischen 20% und 30% der Gesamtlänge des Querträgers (13) von jedem der Enden (15B) des Querträgers (13) angeordnet sind.

8. Struktur (1) nach einem der Ansprüche 1 bis 7, **dadurch gekennzeichnet, dass** der Querträger (13) ein quadratisches Biegemoment aufweist, das an zwei Seitenbereichen (15A) maximal ist, die in einem Abstand zwischen 20% und 30% der Gesamtlänge des Querträgers (13) von jedem der Enden (15B) des Querträgers (13) angeordnet sind.

9. Struktur (1) nach einem der Ansprüche 7 und 8, **dadurch gekennzeichnet, dass** die maximale Tiefe B der beiden umgekehrten U-Abschnitte (23) und/oder das maximale quadratische Biegemoment an den Seitenbereichen (15A) des Querträgers (13) um mindestens 20% größer ist als die durchschnittliche Tiefe der Abschnitte (23) bzw. das durchschnittliche quadratische Moment über die gesamte Länge des Querträgers (13).

## Claims

1. Motor vehicle structure (1), comprising a roof cross-member (13), said cross-member (13) comprising two ends (15B) fixed to arch beams (7) of said roof (5), the cross-member (13) having at each of the two ends (15B) a section with a non-rectilinear horizontal profile comprising two opposite lateral portions (19) and a central portion (21) cantilevered between said lateral portions (19), said central portion (21) being capable of bending towards the corresponding roof arc beam (7) (5) in the event of a corresponding force exerted on the cross-member (13), said structure being **characterized in that** each of the two roof arc beams (7) (5) has an opposite indentation (9C, 11C) facing the central portion (21) of the corresponding end section (15B) of the crosspiece (13), allowing said portion to bend.

2. Structure (1) according to claim 1, **characterized in that** a reinforcing sheet (25) is arranged between each of the two ends (15B) of the cross-member (13) and of the corresponding roof arch beam (7) (5).

3. Structure (1) according to claim 2, **characterized in that** each of the two reinforcing sheets (25) forms a recess (25B) facing the central portion (21) of the corresponding end section (15B) of the cross-member (13), allowing the said portion to bend.

4. Structure (1) according to claims 1 and 3, **characterized in that** the recess (25B) in each of the two reinforcing sheets (25) is situated above and at a distance from the recess (9C, 11C) in the corresponding roof arch beam (7) (5), so as to form two successive stages for receiving the central portion (21) of the corresponding end section (15B) of the cross-member (13), in the event of a corresponding force exerted on the cross-member (13).

5. Structure (1) according to one of claims 1 to 4, **characterized in that** the two lateral portions (19) and the central portion (21) of the profile of the section of each of the two ends (15B) of the cross-member (13) are generally rectilinear and connected together by two inverted U-shaped portions (23).

6. Structure (1) according to claim 5, **characterized in that** the two inverted U-shaped portions (23) of the cross-section of the two ends (15B) of the cross-member (13) extend over the entire cross-member (13).

7. Structure (1) according to claim 6, **characterized in that** the two inverted U-shaped portions (23) of the cross section of the cross-member (13) have a maximum depth B at two lateral zones (15A) situated at a distance of between 20% and 30% of the total length of the cross-member (13) from each of the ends (15B) of the said cross-member (13).

8. Structure (1) according to one of claims 1 to 7, **characterized in that** the cross-member (13) has a quadratic bending moment which is at a maximum at two lateral zones (15A) situated at a distance of between 20% and 30% of the total length of the cross-member (13) from each of the ends (15B) of the said cross-member (13).

9. Structure (1) according to one of claims 7 and 8, **characterized in that** the maximum depth B of the two inverted U-shaped portions (23) and/or the maximum bending quadratic moment at the lateral zones (15A) of the cross-member (13) is at least 20% greater than the average depth of said portions (23) and/or at the average quadratic moment over the entire length of the cross-member (13), respectively.
